# EUROPÄISCHE PATENTSCHRIFT

(11) **EP 1 782 676 B1**
(45) Veröffentlichungstag und Bekanntmachung des Hinweises auf die Patenterteilung: **19.11.2008**
(21) Anmeldenummer: 06022474.8
(22) Anmeldetag: 27.10.2006
(51) Int. Cl.: A01D 78/10

(54) **Heuwerbungsmaschine**
Haymaking machine
Machine de fenaison

(30) Priorität: 04.11.2005 DE 102005053059
(43) Veröffentlichungstag der Anmeldung: 09.05.2007
(73) Patentinhaber: LTH Landtechnik Hohenmölsen GmbH, 06679 Hohenmölsen (DE)
(72) Erfinder: Daferner, Gerhard, 86554 Pöttmes (DE); Frinzl, Richard, 86529 Schrobenhausen (DE)
(74) Vertreter: Rapp, Bertram

(56) Entgegenhaltungen:
- DE-U1- 9 111 676
- DE-U1- 29 818 457

## Beschreibung

Die Erfindung betrifft eine Heuwerbungsmaschine nach dem Oberbegriff des Anspruchs 1.

Aus der EP 0 381 970 A2 ist eine Heuwerbungsmaschine bekannt, bei der die Ausleger, welche Arbeitskreisel mit jeweils mehreren Rechen tragen, teleskopartig ausgebildet sind und hierdurch eine Verstellung ihrer Länge erlauben. Beim Hochklappen der Arbeitskreisel von der annähernd waagrechten Arbeitsstellung in die annähernd senkrechte Transportstellung werden die Ausleger in ihrer Länge verkürzt, wodurch sich eine geringere Höhe der Maschine in der Transportstellung ergibt, die für die Durchfahrt durch Unterführungen oder Tore erwünscht ist.

Ein anderer Weg zur Erzielung einer geringen Maschinenhöhe in der Transportstellung wird in der EP 0 484 794 B1 gelehrt. Dort ist vorgesehen, beim Hochklappen der Arbeitskreisel in die Transportstellung das Maschinengestell in dem Bereich, in dem die Ausleger mit den Arbeitskreiseln angebracht sind, abzusenken. Eine weitere Lösung, die zum Stand der Technik gehört, besteht in einer teilweisen Demontage der Rechen der Arbeitskreisel zur Vorbereitung der Transportstellung und erfordert somit einen relativ großen Arbeitsaufwand.

Das Problem der Maschinenhöhe beim Hochklappen der Arbeitskreisel ergibt sich grundsätzlich daraus, dass die Arbeitskreisel in der Arbeitsstellung einen gewissen Arbeitsabstand voneinander haben müssen, dessen Größe insbesondere von der zu bearbeitenden Futtermenge abhängt. Ohne zusätzliche Maßnahmen würde ein senkrechtes Hochklappen der Arbeitskreisel daher stets zu einer Höhe führen, die ungefähr dem Kreiseldurchmesser zuzüglich des halben Arbeitsabstandes entspricht.

Die vorausgehend zum Stand der Technik genannten Lösungen sind zur Verbringung einer Heuwerbungsmaschine in ein transportfähiges Format nur für Maschinen mit begrenzter Seitenabmessung in der Arbeitsstellung geeignet. Bei Maschinen mit besonders großer Arbeitsbreite, insbesondere für solche mit vier Kreiseln, von denen zwei in Arbeitsstellung einen wesentlich größeren Abstand vom Maschinengestell haben müssen als die beiden anderen, stoßen die bekanten Lösungen an ihre Grenzen.

Eine dem Oberbegriff des Anspruchs 1 entsprechende Heuwerbungsmaschine ist aus der DE 298 18 457 U1 bekannt. Durch die Unterteilung der die Arbeitskreisel tragenden Ausleger in jeweils einen Innenabschnitt und einen an dessen Ende angelenkten, um eine in Arbeitsstellung vertikale Achse schwenkbaren Außenabschnitt kann sowohl die Arbeitsbreite der Maschine variiert und bei Bedarf sehr groß gewählt werden, als auch eine Transportstellung mit geringer Höhe erzielt werden, indem zum Transport sowohl die Innenabschnitte um vertikale Achsen am Maschinengestell hochgeklappt, als auch die Außenabschnitte gegenüber dem jeweils zugehörigen Innenabschnitt eingeklappt werden. Der Antrieb der Arbeitskreisel erfolgt entweder hydraulisch oder über Gelenkwellen, wobei im letztgenannten Fall am Innenabschnitt des Auslegers ein nicht näher spezifiziertes Getriebe benötigt wird.

Die Aufgabe der Erfindung besteht darin, für eine Heuwerbungsmaschine mit großer Seitenabmessung in der Arbeitstellung und zweiteiligen Auslegern, deren Innen- und Außenabschnitte jeweils durch ein Gelenk miteinander verbunden sind, eine einfache und zweckmäßige Lösung zur Erzielung einer geringen Höhe in der Transportstellung zu schaffen, die einen mechanischen Antrieb der Arbeitskreisel ermöglicht.

Diese Aufgabe wird erfindungsgemäß durch eine Heuwerbungsmaschine mit den Merkmalen des Anspruchs 1 gelöst. Vorteilhafte Ausgestaltungen sind in den Unteransprüchen angegeben.

Durch die Aufteilung der Ausleger in einen Innenabschnitt und einen an einem außenliegenden Gelenk einschwenkbaren Außenabschnitt wird ein großer Schwenkwinkel und damit eine erhebliche Längenänderung der Ausleger zwischen der Arbeitsstellung und der Transportstellung ermöglicht, wie sie insbesondere für die äußeren Arbeitskreisel von Heuwerbungsmaschinen mit vier Arbeitskreiseln benötigt wird. Damit lässt sich für Arbeitskreisel mit großem Arbeitsabstand vom Maschinengestell eine relativ geringe Höhe in senkrecht hochgeklappter Stellung erzielen. Erfindungsgemäß wird dabei der Kreiselantrieb mit zwei durch ein Wellenverbindungsglied hintereinandergekuppelten Gelenkwellen realisiert und besagtes Wellenverbindungsglied dergestalt mit dem Auslegergelenk verbunden, dass bei einer Schwenkung des Außenabschnitts die Schwenkwinkel beider Gelenkwellen gegenüber dem Wellenverbindungsglied jeweils annähernd gleich groß sind.

Durch einen geeigneten Mechanismus lässt sich in diesem Fall der Schwenkwinkel des Auslegers hälftig auf die beiden Gelenkwellen aufteilen, so dass sich für diese Schwenkwinkel von unter 90° ergeben, die ohne weiteres mit den üblichen endseitigen Kardangelenken von Gelenkwellen zu bewältigen sind.

In vorteilhafter Weise kann ein einschwenkbarer Ausleger in seinem Innenabschnitt nach Art eines Teleskops aufgebaut sein, so daß die Arbeitskreisel nach dem Einschwenken und senkrechten Hochklappen noch abgesenkt werden können, um eine besonders geringe Höhe der Maschine in der Transportstellung zu erzielen.

Weitere Vorteile und Merkmale der Erfindung gehen aus der nachfolgenden Beschreibung eines Ausführungsbeispiels unter Bezugnahme auf die Zeichnungen hervor. In diesen zeigt
- Fig. 1: schematische Seitenansichten einer erfindungsgemäßen Heuwerbungsmaschine mit vier Arbeitskreiseln,
- Fig. 2: eine schematische Draufsicht auf eine erfindungsgemäße Heuwerbungsmaschine mit vier Arbeitskreiseln in der Arbeitsstellung,

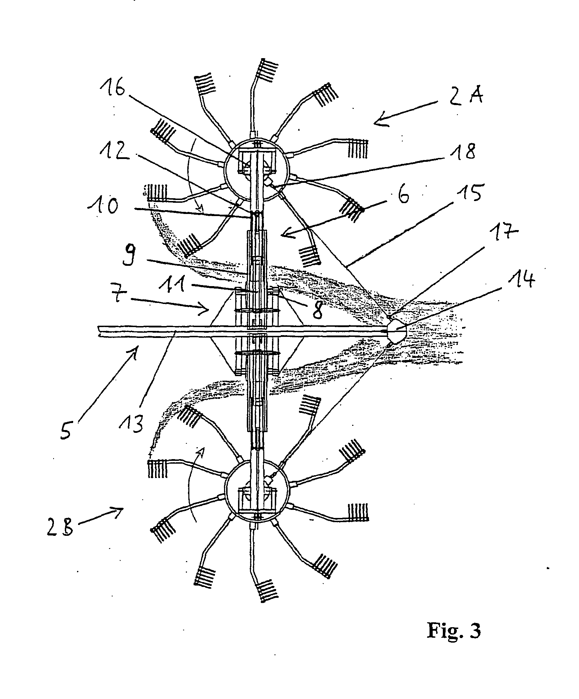

- Fig. 3: einen vergrößerten Ausschnitt aus Fig. 2
- Fig. 4: einen vergrößerten Ausschnitt aus Fig. 3,
- Fig. 5: eine schematische Ansicht von vorne des hinteren Teils einer erfindungsgemäßen Heuwerbungsmaschine in einer ersten Transportstellung,
- Fig. 6: eine schematische Ansicht von vorne des hinteren Teils einer erfindungsgemäßen Heuwerbungsmaschine in einer zweiten Transportstellung,
- Fig. 7: einen vergrößerten Ausschnitt aus Fig. 6,
- Fig. 8: eine schematische Draufsicht auf eine erfindungsgemäße Heuwerbungsmaschine mit vier Arbeitskreiseln nach dem Einschwenken der äußeren Arbeitskreisel,
- Fig. 9: eine Detailansicht des Mechanismus zum Einschwenken der äußeren Arbeitskreisel in der Arbeitsstellung,
- Fig. 10: eine Detailansicht des Mechanismus zum Einschwenken der äußeren Arbeitskreisel in der eingeschwenkten Stellung.

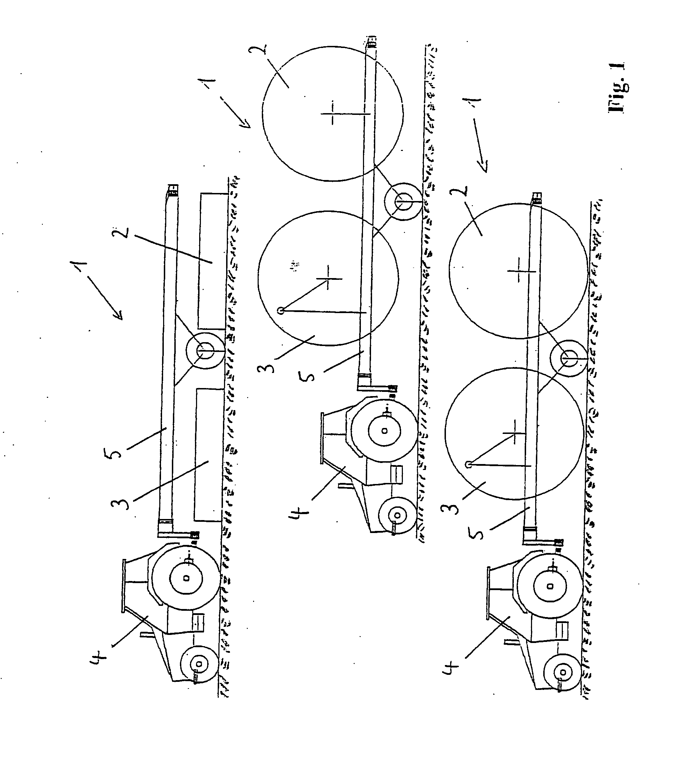

In Fig. 1 ist eine erfindungsgemäße Heuwerbungsmaschine 1, auch Schwader genannt, mit insgesamt vier Arbeitskreiseln in drei verschiedenen Stellungen in einer Seitenansicht dargestellt. Die Maschine wird von einem Schlepper 4 gezogen und angetrieben. Wegen der Seitenansicht sind nur zwei Arbeitskreisel 2 und 3 zu erkennen. Die oben gezeigte Stellung ist die Arbeitsstellung, in der die Arbeitskreisel 2 und 3 durch ein Maschinengestell 5 waagrecht in geeignetem Abstand vom Boden geführt werden. Die in der Mitte gezeigte Stellung ist eine erste Transportstellung, in der die Arbeitskreisel 2 und 3 senkrecht nach oben geschwenkt sind, um die Maschine 1 auf eine für den Transport geeignete Breite zu bringen. Im Hinblick auf das Befahren unebenen Geländes besteht in dieser Stellung ein gewisser Abstand zum Boden. Die unten gezeigte Stellung ist eine zweite Transportstellung, in der die Arbeitskreisel 2 und 3 fast bis auf den Boden abgesenkt sind, um die Höhe der Maschine 1 fast bis auf das durch den Kreiseldurchmesser gegebene Minimalmaß zu verringern und so eine Durchfahrt durch Unterführungen oder Tore zu ermöglichen. Diese Stellung ist insbesondere auch als Parkstellung zum Abstellen der Maschine 1 in einer Scheune geeignet.

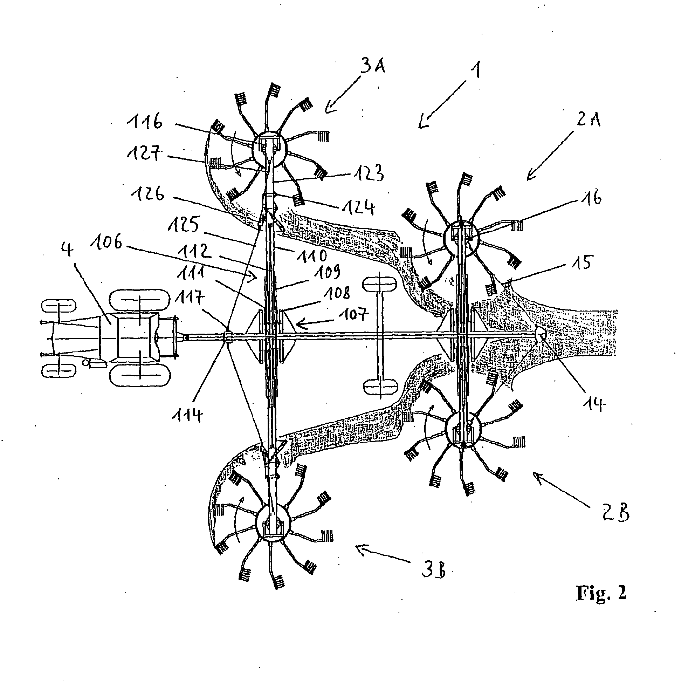

Eine Draufsicht auf eine erfindungsgemäße Heuwerbungsmaschine 1 mit vier Arbeitskreiseln 2A, 2B, 3A und 3B in Arbeitsstellung zeigt Fig. 2, wobei die grundsätzliche Anwendbarkeit der Erfindung nicht von der Anzahl der Arbeitskreisel abhängt. Die Arbeitskreisel 2A und 3A drehen sich im Betreib der Maschine in entgegen gesetzter Richtung wie die Arbeitskreisel 2B und 3B, wie es durch vier Pfeile angedeutet ist. Die äußeren Arbeitskreisel 3A und 3B befördern das zu sammelnde Futter zunächst in den Arbeitsbereich der inneren Arbeitskreisel 2A und 2B wo es von diesen weiter zu einer einzigen Schwade konzentriert wird. Aufgrund der Symmetrie der Maschine 1 in Bezug auf die Längsachse des Maschinengestells 5 genügt im folgenden eine Erläuterung anhand einer Seite. Zunächst wird dabei auf den hinteren Teil der Maschine mit den beiden inneren Arbeitskreiseln 2A und 2B eingegangen.

Der Arbeitskreisel 2A wird von einem Ausleger 6 getragen, der über eine Lagerung 7 mit dem Maschinengestell 5 verbunden ist. Die Lagerung 7 ermöglicht eine Schwenkung des Auslegers 6 um einen Winkel von etwa 90° um eine parallel zur Längsachse des Maschinengestells 5 verlaufende Achse 8 zur Verbringung der Maschine 1 in eine Transportstellung. Es leuchtet ein, dass eine solche Schwenkung allein eine beträchtlich über dem Durchmesser eines Arbeitskreisels 2A oder 2B liegende Gesamthöhe der Maschine 1 in ihrer Transportstellung zur Folge hätte.

Um den Arbeitskreisel 2A nach dem Hochschwenken absenken zu können, ist der Ausleger 6 nach Art eines Teleskops ausgebildet, d.h. er weist ein Außenrohr 9 und ein längsverschiebbar in diesem gelagertes Innenrohr 10 auf. Das Außenrohr 9 ist schwenkbar an der Lagerung 7 gelagert und gelenkig mit einem Linearaktor in Form eines Hydraulikzylinders 11 verbunden, der auch an der Lagerung 7 angelenkt ist, und zwar so, dass eine Auslenkung des Hydraulikzylinders 11 in eine Schwenkung des Auslegers 6 um die Achse 8 umgesetzt wird.

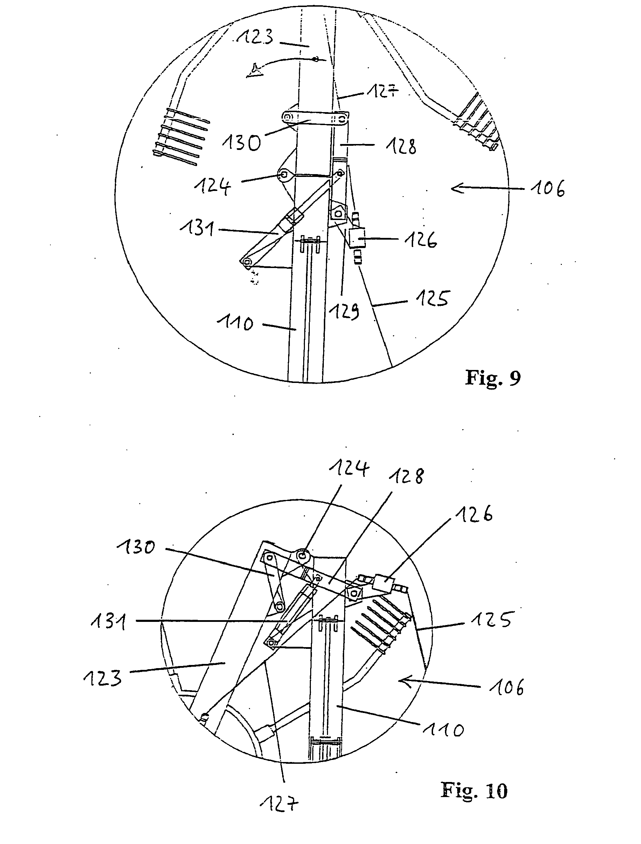

Zur Längsverschiebung des Innenrohres 10 gegenüber dem Außenrohr 9 ist ein weiterer Hydraulikzylinder 12 vorgesehen, der einerseits an dem Außenrohr 9 und andererseits an dem Innenrohr 10 angelenkt ist. Dabei kann der Hydraulikzylinder 12 auch innerhalb des Auslegers 6, d.h. innerhalb des Innenrohres 10 oder zwischen dem Innenrohr 10 und dem Außenrohr 9 angeordnet sein. In Fig. 2 ist erkennbar, dass das Innenrohr 10 in der dort gezeigten Arbeitsstellung der Maschine 1 zumindest teilweise aus dem Außenrohr 9 ausgefahren ist. Es braucht aber keineswegs ganz, d.h. bis zum Ende seines Verfahrweges ausgefahren zu sein. Vielmehr läßt sich durch den Verfahrweg des Innenrohres 10 der Abstand des Arbeitskreisels 2A von der Längsmittelachse des Maschinengestells 5 und in Verbindung mit der gegenüberliegenden Seite der Maschine 1 der Arbeitsabstand der beiden Arbeitskreisel 2A und 2B einstellen, um eine Futterschwade mit einer gewünschten Breite zu erzielen, worauf später anhand Fig. 10 noch eingegangen wird.

Nur schematisch eingezeichnet ist in Fig. 2 der Antrieb der Arbeitskreisel 2A und 2B. Dieser erfolgt über eine mit einer rückwärtigen Abtriebswelle des Schleppers 4 gekuppelte, mittig entlang des Maschinengestells 5 verlaufenden Zentralantriebswelle 13, ein hinteres Zentralgetriebe 14, sowie auf der Seite des Arbeitskreisels 2A weiter über eine Kreiselantriebswelle 15 und ein Kreiselgetriebe 16. Es versteht sich, daß die beiden letztgenannten Antriebskomponenten auf der Seite des Arbeitskreisels 2B in symmetrischer Anordnung vorhanden sind. Nicht in der Zeichnung dargestellt ist die Tatsache, daß die Kreiselantriebswelle 15 ebenso wie der Ausleger 6 eine Teleskopstruktur mit zwei zueinander längsverschiebbaren konzentrischen Rohren verschiedenen Durchmessers oder eines Rohres und eines Stabes aufweist. Teleskopierbare Antriebswellen bzw. Gelenkwellen mit endseitigen Kardangelenken sind als solche bekannt und brauchen hier nicht erläutert zu werden.

Wesentlich ist die Schrägstellung der Längsachse der Kreiselantriebswelle 15 sowohl gegenüber der Längsmittelachse des Maschinengestells 5, als auch gegenüber der Längsachse des Auslegers 6. Besagte Achsen bilden nämlich ein rechwinkeliges Dreieck, so daß nach dem Satz des Pythagoras eine Verkürzung des Auslegers um eine bestimmte Strecke mit einer deutlich geringeren Verkürzung der Kreiselantriebswelle 15 einhergeht. So beträgt beispielsweise bei einem Winkel von 45° zwischen den Längsachsen der Kreiselantriebswelle 15 und der Zentralantriebswelle 13 in der Arbeitsstellung, wie ihn in Fig. 2 ungefähr zeigt, bei einer Verkürzung des Auslegers 6, die einer Halbierung des Abstandes der Kreiseldrehachse von der Längsmittelachse des Maschinengestells 5 entspricht, die damit einhergehende Verkürzung der Kreiselantriebswelle 15 nur etwa 60% der Verkürzung des Auslegers 6. Dies ist im Hinblick auf den eingeschränkten Längeneinstellbereich von Teleskopantriebswellen von großem Vorteil.

In Fig. 2 sind an dem hinteren Zentralgetriebe 14 sowie an dem Kreiselgetriebe 16 jeweils ein Anschlussstummel 17 bzw. 18 zu sehen, die so ausgerichtet sind, dass sie näherungsweise miteinander fluchten. Die Längsrichtungen dieser sichtbaren Anschlussstummel 17 und 18 entsprechen den Richtungen der Drehachsen der Abtriebswelle des hinteren Zentralgetriebes bzw. der Antriebswelle des Kreislegetriebes 16. Bei der Ausbildung der Kreiselantriebswelle 15 als Gelenkwelle mit Kardangelenken an beiden Enden kann zwar ein seitlicher Versatz und auch eine Winkelabweichung zwischen den Anschlussstummeln 17 und 18 bis zu einem gewissen Ausmaß toleriert werden, doch wäre es bei dem relativ großen Winkel zwischen der Kreiselantriebswelle 15 und dem Ausleger 6, wie er in Fig. 2 gezeigt ist, nicht mehr möglich, ein hinteres Zentralgetriebe 14 mit zur Antriebsachse senkrechten Abtriebsachsen zu verwenden, oder den kreiselseitigen Anschlussstummel 18 parallel zum Ausleger 6 auszurichten, da dies die Ausgleichwirkung einer Gelenkwelle überfordern würde. Die Ausrichtung der Anschlussstummel 18 und 18 zueinander muss also an die Schrägstellung der Kreiselantriebswelle angepasst werden.

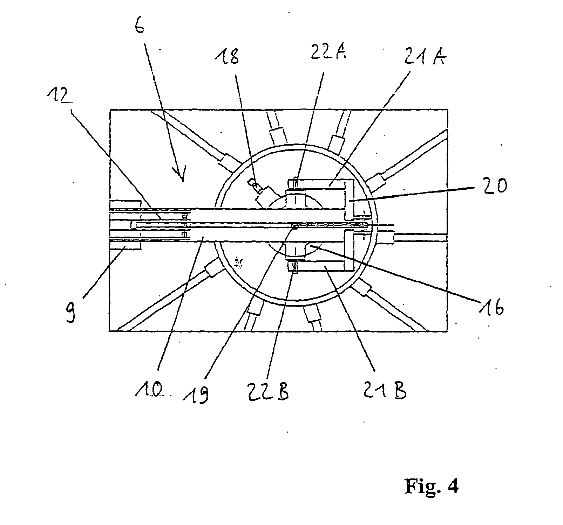

Ein wichtiges Detail aus Fig. 2, nämlich die Befestigung des Arbeitskreisels 2A am Ende des Auslegers 6, ist in Fig. 4 vergrößert dargestellt. Wie dort zu erkennen ist, endet das Innenrohr 10 des Auslegers 6 nicht an der Drehachse 19 des Arbeitskreisels 2A oder davor, sondern es erstreckt sich ein Stück weit über die Drehachse 19 hinaus. Am Ende des Innenrohres 10 erstreckt sich in Querrichtung eine fest mit dem Innenrohr 10 verbundene Brücke 20, von der aus zwei Tragwinkel 21A und 21B bis auf die Höhe der Kreiseldrehachse 19 zurückragen. Die Tragwinkel 21A und 21B erstrecken sich von den Enden der Brücke 20 aus zunächst senkrecht nach unten, was in der Ansicht von Fig. 4 nicht sichtbar ist, und anschließend erst waagrecht zurück bis zur Drehachse 19 des Arbeitskreisels 2A. Dort sind sie über Drehgelenke 22A bzw. 22B mit dem Gehäuse des Kreiselgetriebes 16 verbunden. An letzterem ist in Fig. 4 noch der Anschlussstummel 18 erkennbar, der zum Ankuppeln der Kreiselantriebswelle 15 bestimmt ist.

Die Länge der senkrechten Abschnitte der Tragwinkel 21A und 21B ist so bemessen dass der Abstand der Unterseite des Innenrohres 10 von der Oberseite des Gehäuses des Kreiselgetriebes 16 dazu ausreicht, dass das Innenrohr 10 mittels des Hydraulikzylinders 12 so weit in das Außenrohr 9 eingezogen werden kann, bis das Ende des Außenrohres 9 an der Brücke 20 anschlägt. Durch diese Gestaltung der Befestigung des Arbeitskreisels 2A an dem Ausleger 6 ergibt sich ein erweiterter Verkürzungsbereich der Auslegerlänge.

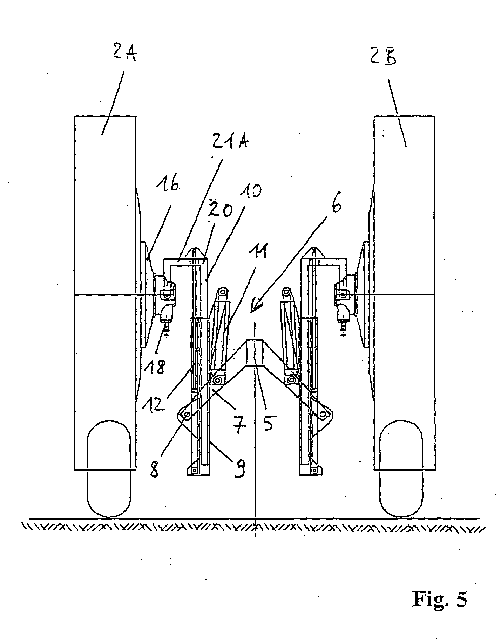

Fig. 5 zeigt eine Vorderansicht des hinteren Teils der erfindungsgemäßen Heuwerbungsmaschine 1 in einer ersten Transportstellung, in der die beiden Arbeitskreisel 2A und 2B senkrecht hochgeklappt und teilweise abgesenkt sind. Diese Stellung entspricht der mittleren der in Fig. 1 gezeigten Stellungen. Die eingetragenen Bezugszahlen entsprechen denjenigen der vorausgehenden Figuren. Der Hydraulikzylinder 11 ist ganz eingefahren, um den Ausleger 6 und damit auch den Arbeitskreisel 2A senkrecht nach oben zu klappen. Der Hydraulikzylinder 12 ist in dieser Stellung zur Absenkung des Arbeitskreisels 2A teilweise eingefahren. Die Kreiselantriebswellen und das hintere Zentralgetriebe 14 sind in Fig. 5 der Übersichtlichkeit halber nicht dargestellt.

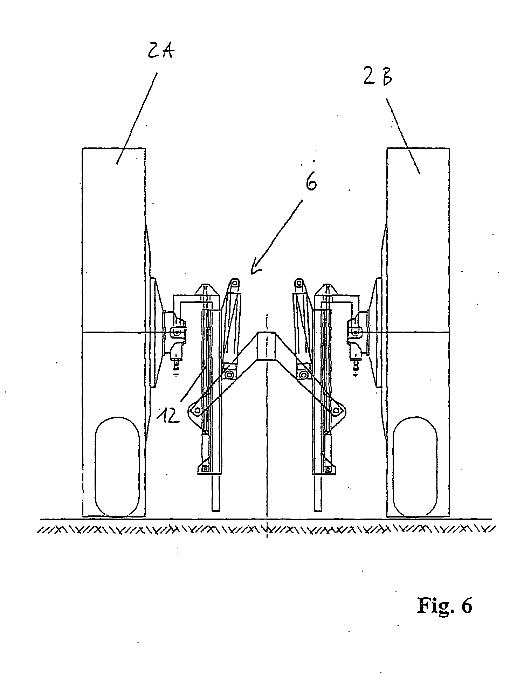

Fig. 6 zeigt eine Vorderansicht des hinteren Teils der erfindungsgemäßen Heuwerbungsmaschine 1 in einer zweiten Transportstellung, in der die beiden Arbeitskreisel 2A und 2B senkrecht hochgeklappt und vollständig, d.h. bis fast auf den Boden abgesenkt sind. Diese Stellung entspricht der unteren der in Fig. 1 gezeigten Stellungen. Der Hydraulikzylinder 12 ist in dieser Stellung im Unterschied zu derjenigen von Fig. 5 zur weiteren Absenkung des Arbeitskreisels 2A nahezu vollständig eingefahren. Auch in Fig. 6 sind die Kreiselantriebswellen und das hintere Zentralgetriebe 14 weggelassen.

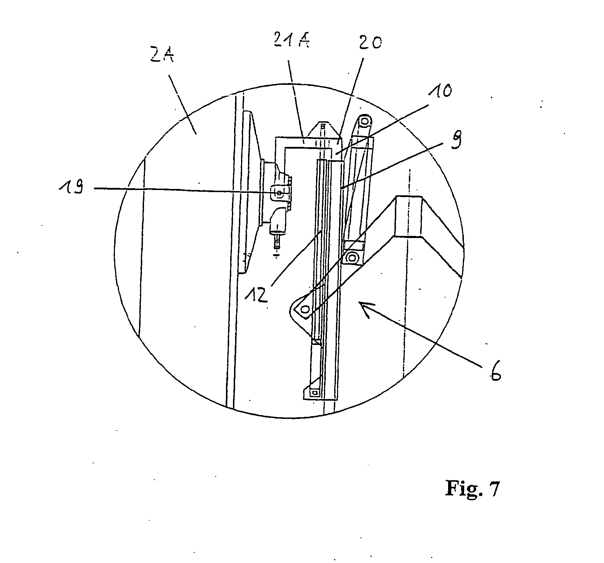

Ein einen vergrößerten Ausschnitt aus Fig. 6, nämlich den Bereich des Auslegers 6, zeigt Fig. 7. Darin ist deutlich sichtbar, wie das Außenrohr 9 des Auslegers 6 die Drehachse 19 des Arbeitskreisels 2A überragt und fast bis zu der Brücke 20 reicht. Es wird deutlich, wie durch die Gestaltung der Befestigung des Gehäuses des Kreiselgetriebes 16 am Ende des Innenrohres 10 mit Hilfe der Brücke 20 und der zurückragenden Tragwinkel 21A und 21B ein zusätzlicher Spielraum für die Absenkung des Arbeitskreisels 2A geschaffen wird.

Im folgenden wird auf den vorderen Teil der Maschine 1 mit den beiden äußeren Arbeitskreiseln 3A und 3B eingegangen. Für deren Absenkung zur Verbringung in eine Transportstellung der Maschine 1 ist, wie Fig. 2 erkennen lässt, ein teilweise gleichartiger Mechanismus wie für die inneren Arbeitskreisel 2A und 2B vorgesehen. Diese Gleichartigkeit bezieht sich auf die Lagerung 107 des den Arbeitskreisel 3A tragenden Auslegers 106 am Maschinengestell 5, die ein senkrechtes Hochklappen um eine Achse 108 erlaubt, ferner auf die Ausbildung des Auslegers 106 nach Art eines Teleskops mit einem Außenrohr 109 und einem Innenrohr 110, sowie auf die Betätigung des Hochklappens durch einen Hydraulikzylinder 111 und der Verschiebung des Innenrohres 110 gegenüber dem Außenrohr ebenfalls durch einen Hydraulikzylinder 112. Zur Verdeutlichung der Korrespondenzen unterscheiden sich die Bezugszahlen der genannten Elemente von den entsprechenden Elementen des hinteren Teils der Maschine 1 jeweils um genau 100.

Im Unterschied zum hinteren Teil der Maschine 1 ist das äußere Ende des Innenrohres 110 des Auslegers 106 jedoch nicht in der gleichen Weise wie dort mit dem Gehäuse des Kreiselgetriebes 116 des Arbeitskreisels 3A verbunden, sondern das Außenrohr 109 und das Innenrohr 110 bilden zusammen einen Innenabschnitt 109,110 des Auslegers 106, an den sich ein zusätzlicher Außenabschnitt 123 anschließt. Erst an dessen Ende ist in diesem Fall das Gehäuse des Kreiselgetriebes 116 befestigt.

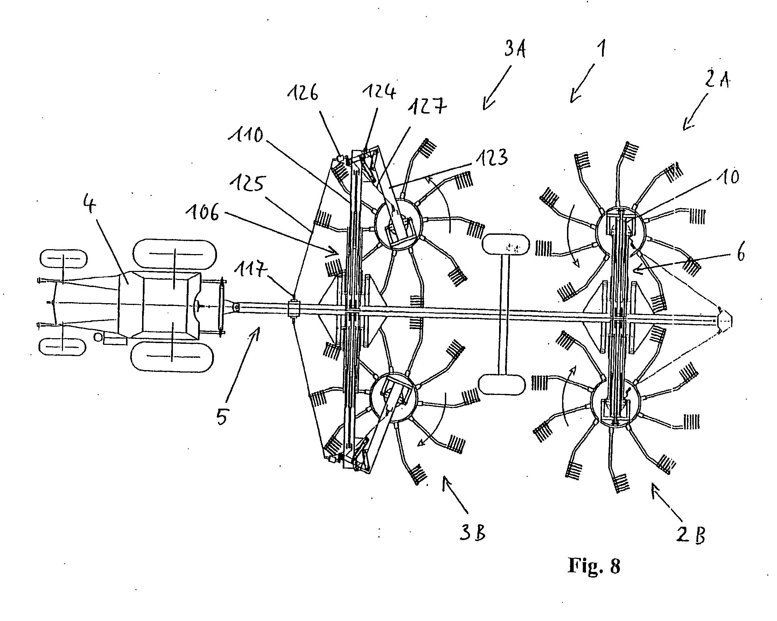

Der Außenabschnitt 123 ist mit dem Innenabschnitt 109,110 durch ein Auslegergelenk 124 verbunden, dessen Drehachse senkrecht sowohl zur Längsachse des Maschinengestells 5, als auch zur Längsachse des Auslegers 106 verläuft. Die Funktion des Auslegergelenks 124 verdeutlicht Fig. 8, in der die erfindungsgemäße Heuwerbungsmaschine 1 nach dem Einschwenken der äußeren Arbeitskreisel 3A und 3B mittels des Auslegergelenks 124 und des entsprechenden Auslegergelenks auf der gegenüberliegenden Seite der Maschine 1 dargestellt ist. Außerdem sind in der Stellung von Fig. 8 die Innenrohre 10 und 110 der Teleskopstrukturen des Auslegers 6 bzw. des Innenabschnitts 109,110 des Auslegers 106 so weit eingefahren, dass die Arbeitskreisel 3A und 3B so weit wie in waagrechter Stellung möglich an das Maschinengestell 5 herangefahren sind. Gleiches gilt für die gegenüberliegenden Arbeitskreisel 2B und 3B, so dass die Maschine 1 insgesamt zum Hochklappen aller Arbeitskreisel 2A, 2B, 3A und 3B vorbereitet ist.

Aufgrund des Auslegergelenks 124 kann der Arbeitskreisel 3A nicht mit einer einzigen durchgehenden Antriebswelle vom Maschinengestell 5 aus angetrieben werden. Deshalb erstreckt sich von einem vorderen Zentralgetriebe 114 aus zunächst eine innere Kreiselantriebswelle 125 bis zu einem im Bereich des Auslegergelenks 124 angeordneten Wellenverbindungsglied 126 und von diesem aus eine weitere, äußere Kreiselantriebswelle 127 zum Kreiselgetriebe 116 des Arbeitskreisels 3A. Wie bereits die Kreiselantriebswelle 15 des Arbeitskreisels 2A sind auch die Kreiselantriebswellen 125 und 127 nur schematisch dargestellt. Es handelt sich bei diesen um teleskopartig längenveränderliche Gelenkwellen an sich bekannter Art mit Kardangelenken an beiden Enden.

Da bei dem Ausleger 106 die Variation der Länge in erster Linie durch das Schwenken des Außenabschnitts 123 um das Auslegergelenk 124 erfolgt, braucht die innere Kreiselantriebswelle 125 nicht so stark gegenüber dem Ausleger 106 geneigt zu sein wie die Kreiselantriebswelle 15 gegenüber dem Ausleger 6. Deshalb kann als vorderes Zentralgetriebe 114 ein einfacheres Getriebe mit senkrecht zur Antriebswelle ausgerichteten Abtriebswellen verwendet werden, da der geringere Neigungswinkel der Kreiselantriebswelle 125 durch die Kardangelenke an ihren Enden ausgeglichen werden kann. Diese einfachere Ausführungform des vorderen Zentralgetriebes 114 ist in den Figuren 2 und 8 an der senkrechten Ausrichtung des Anschlussstummels 117 zur Längsachse des Maschinengestells erkennbar.

Allerdings verläuft die innere Kreiselantriebswelle 125 schräg zu dem Ausleger 106 und bildet also mit dessen Längsachse und derjenigen des Maschinengestells 5 ein Dreieck. Auf diese Weise befindet sich das vordere Zentralgetriebe 114 abseits der Lagerung 107 des Auslegers 105, ebenso wie sich das hintere Zentralgetriebe 14 abseits der Lagerung 7 des Auslegers 6 befindet. Die Zentralgetriebe 14 und 114 und die Kreiselantriebswellen 15 und 125 sind dem Mechanismus der Lagerung 7 bzw. 107 auf diese Weise nicht im Wege und brauchen nicht in dessen Gestaltung einbezogen werden.

Wie aus Fig. 8 ersichtlich ist, erfahren die endseitigen Kardangelenke der beiden Kreiselantriebswellen 125 und 127 beim Einschwenken des Arbeitskreisels 3A mittels des Auslegergelenks 124 an dem Wellenverbindungsglied 126 eine beträchtliche Winkelauslenkung. Durch einen erfindungsgemäßen Mechanismus wird hierbei sehr große Schwenkwinkel von ungefähr 160° des Außenabschnitts 123 des Auslegers 106 gegenüber dessen Innenabschnitt 109,110 in zwei annähernd gleich große Schwenkwinkel von ungefähr 80° jeder der beiden Kreiselantriebswellen 125 und 127 gegenüber dem Wellenverbindungsglied 126 aufgeteilt. Hierdurch wird überhaupt erst der sehr große, nicht weit von 180° entfernte Schwenkwinkel des Außenabschnitts 123 des Auslegers 106 gegenüber dessen Innenabschnitt 109,110 ermöglicht.

Dieser Mechanismus zur gleichmäßigen Aufteilung des Schwenkwinkels des Außenabschnitts 123 des Auslegers 106 ist in den Figuren 9 und 10 im Detail dargestellt. Dabei zeigt Fig. 9 die Arbeitsstellung des Maschine 1 gemäß Fig. 2, in der das Innenrohr 110 des Innenabschnitts 109,110 des Auslegers 106 mit dem Außenabschnitt 123 fluchtet, und Fig. 10 die zum Hochklappen der Arbeitskreisel 2A, 2B, 3A und 3B bereite Stellung der Maschine 1 gemäß Fig. 8, wobei den Figuren 9 und 10 nicht die gleiche Ansichtsrichtung wie Fig. 8 (Draufsicht) zugrunde liegt, sondern eine Ansicht von unten, also in entgegengesetzter Richtung.

Wie in den Figuren 9 und 10 zu sehen ist, liegt das als Scharniergelenk ausgebildete Auslegergelenk 124, welches das Ende des Innenrohres 110 des Innenabschnitts 109,110 mit dem Außenabschnitt 123 verbindet, mit seiner Drehachse außerhalb des Auslegers 106 auf Höhe der aneinander grenzenden Enden der beiden Abschnitte 109,110 und 123 andererseits, wodurch ein großer Schwenkwinkel von nahezu 180° ermöglicht wird. An der dem Auslegergelenk 124 gegenüberliegenden Seite des Auslegers 106 ist an dem Innenrohr 110 des Innenabschnitts 109,110 ein Hebel 128 an einem Ende angelenkt. Dieses Ende des Hebels 128 ist durch einen gekröpften Fortsatz 129 starr mit dem Wellenverbindungsglied 126 verbunden. Das Wellenverbindungsglied 126 ist in der ausgeschwenkten, d.h. insgesamt geraden Stellung des Auslegers 106 annähernd parallel zur Längsachse des Auslegers 106 ausgerichtet, so dass die äußere Kreiselantriebswelle 127 gegenüber der inneren Kreiselantriebswelle 125 nur um einen kleinen Winkel geneigt ist.

Auf der Seite des Auslegergelenks ist an dem Außenabschnitt 123 ein Lenker 130 an einem Ende angelenkt. An seinem anderen Ende ist der Lenker 129 gelenkig mit dem freien Ende des Hebels 128 verbunden. Ferner ist auf der Seite des Auslegergelenks 124 an dem Innenrohr 110 des Innenabschnitts 109,110 ein Linearaktor in Form eines Hydraulikzylinders 131 angelenkt. Das andere Ende des Hydraulikzylinder ist an dem Hebel 128 zwischen dessen Gelenkverbindungen mit dem Innenrohr 110 und mit dem Lenker 129, vorzugsweise im mittleren Bereich, angelenkt. Die Drehachsen sämtlicher Gelenke im Verbindungsbereich des Innenabschnitts 109, 110 mit dem Außenabschnitt 123 des Auslegers 106 liegen parallel zueinander. Im gestreckten Zustand des Auslegers 106 gemäß Fig. 9 liegt der Hebel 128 annähernd parallel zur Längsachse des Auslegers 106 und der Lenker 130 liegt annähernd senkrecht zu dieser. Der Hydraulikzylinder 131 liegt in einem Winkel von ungefähr 45° zur Längsachse des Auslegers 106.

Der Bewegungsablauf beim Einschwenken des Außenabschnitts 123 und somit des an diesem befestigten Arbeitskreisels 3A ist folgender: Durch das Einfahren des Hydraulikzylinders 131 wird der Hebel 128 auf den Hydraulikzylinder 131 zu geschwenkt. Durch den Lenker 130 wird die von dem Hydraulikzylinder 131 auf den Hebel 128 ausgeübte Kraft auf den Außenabschnitt 123 des Auslegers 106 übertragen, der daraufhin um die Drehachse des Auslegergelenks 124 in Richtung des in Fig. 9 oben eingetragenen Pfeils, d.h. nach links schwenkt. Im Zuge der Schwenkbewegung verändern sich die Winkel sämtlicher beweglicher Elemente zueinander. In der vollständig eingeschwenkten Endstellung des Außenabschnitts 123 des Auslegers 106 mit einem Winkel von ca. 160° zwischen dem Innenrohr 110 und dem Außenabschnitt 123 bilden der Hebel 128 und der Lenker keinen rechten Winkel mehr, sondern einen kleineren Winkel von ca. 55°. Der Hebel 128 steht jetzt schräg zur Längsachse des Innenrohres 110 unter einem Winkel von ca. 70°. Der Hydraulikzylinder ist vollständig eingefahren.

Der Zweck des beschriebenen Mechanismus besteht wie erwähnt in der hälftigen Aufteilung des großen Schwenkwinkels des Außenabschnitts 123 auf zwei entsprechend kleinere Schwenkwinkel der beiden Kreiselantriebswellen 125 und 127 gegenüber dem Wellenverbindungsglied 126, die von den endseitigen Kardangelenken der Kreiselantriebswellen 125 und 127 bewältigt werden können. Es versteht sich, daß die sich bei der Schwenkung des Außenabschnitts 123 ergebenden Schwenkwinkel der Kreiselantriebswellen 125 und 127 gegenüber dem Wellenverbindungsglied 126 von den Positionen der Drehachsen der beteiligten Gelenke relativ zueinander sowie von der Länge und dem Kröpfungswinkel des Hebelfortsatzes 129 abhängt und im Einzelfall an die Abmessungen des Auslegers 106 angepaßt werden muß. Dabei ist die Positionierung der Anlenkungen des Hydraulikzylinders 131 ist in erster Linie eine Frage seines Hubweges und seiner Hub- bzw. Zugkraft.

Durch die Ausbildung des Auslegers 106 mit einem einschwenkbaren Außenabschnitt 123 und einem teleskopartig aus- und einfahrbaren Innenabschnitt 109, 110 ergibt sich die Möglichkeit, die äußeren Arbeitskreisel 3A und 3B einer Vierkreisel-Heuwerbungsmaschine in der hochgeklappten Transportstellung auf eine ebenso geringe Höhe zu bringen wie die inneren Arbeitskreisel 2A und 2B, für die eine Teleskopstruktur des Auslegers 6 allein bereits ausreicht.

Es ist noch anzumerken, daß bei dem beschriebenen Ausführungsbeispiel für die äußeren Arbeitskreisel 3A und 3B der Einfachheit halber die gleiche Befestigung des Kreiselgetriebes 116 an dem Außenabschnitt 123 des Auslegers 106 vorgesehen ist wie bei den inneren Arbeitskreiseln 2A und 2B für die Befestigung des Kreiselgetriebes 16 an dem Innenrohr 9 des Auslegers 6. Diese Befestigungsart hat jedoch bei den äußeren Arbeitskreiseln 3A und 3B im Gegensatz zu den inneren 2A und 2B keine Bedeutung, da der Außenabschnitt 123 des Auslegers 106 keine Teleskopstruktur besitzt.

Durch das Ausschwenken des Außenabschnitts 123 des Auslegers 106 in die Arbeitsstellung ergibt sich zunächst ein fester Arbeitsabstand des Arbeitskreisels 3A vom Maschinengestell 5. Mittels der Teleskopstruktur des Innenabschnitts 109, 110 des Auslegers 106 kann dieser Arbeitsabstand dann stufenlos variiert werden. Ebenfalls stufenlos variiert werden kann der Arbeitsabstand des Arbeitskreisels 2A vom Maschinengestell 5 mittels der Teleskopstruktur des Auslegers 6. Gleiches gilt aufgrund der Symmetrie der Maschine 1 auch für die gegenüberliegenden Arbeitskreisel 3B und 2B. Insgesamt können also mit Hilfe der Teleskopstruktur sämtlicher Ausleger die Arbeitsabstände sowohl der äußeren Arbeitskreisel 3A und 3B, als auch der inneren Arbeitskreisel 2A und 2B in weiten Grenzen variiert und insbesondere auch aufeinander abgestimmt werden. Die Teleskopstruktur der Ausleger 6 und 106 dient also nicht nur der Absenkung zum Transport, sondern erfüllt eine Doppelfunktion.

Die Erfindung wurde vorausgehend anhand einer Heuwerbungsmaschine mit vier Arbeitskreiseln erläutert. Es versteht sich aber, dass sie ebenso gut auf Heuwerbungsmaschinen mit nur zwei Arbeitskreiseln angewendet werden kann, wenn ein großer Arbeitsabstand derselben gefordert ist. Auch könnten als Aktoren nicht nur Hydraulikzylinder, sondern beispielsweise auch elektrische Antriebe verwendet werden. Soweit von Rohren als Bestandteilen der Ausleger die Rede war, soll dies keinerlei Beschränkung des Querschnittprofils der relativ zueinander verschiebbaren Elemente zum Ausdruck bringen. Insbesondere kann das Querschnittsprofil auch eckig sein und es muss auch nicht geschlossen sein, sondern es genügt die Fähigkeit zur Bildung einer Linearführung für eine Relativbewegung der einen Ausleger bildenden Elemente in Längsrichtung desselben. Ebenso muss nicht das Element mit der größeren Querschnittsfläche am Maschinengestell fixiert und dasjenige mit der kleineren verschiebbar sein, sondern es könnte auch umgekehrt sein. Auch eine Teleskopausbildung mit mehr als zwei koaxial verschiebbaren Elementen ist grundsätzlich möglich. Solche und ähnliche Abwandlungen der Erfindung liegen im fachmännischen Ermessen und sollen vom Schutz der Patentansprüche umfasst sein.

## Patentansprüche

1. Heuwerbungsmaschine mit einem Maschinengestell und mit an längenveränderlichen Auslegern gelagerten Arbeitskreiseln, die zum Transport um in Fahrtrichtung liegende Schwenkachsen hochklappbar sind, wobei ein Ausleger (106) einen Innenabschnitt (109, 110) und mindestens einen in Längsrichtung auf diesen folgenden Außenabschnitt (123) umfasst und der Außenabschnitt (123) durch ein Auslegergelenk (124) um eine senkrecht zur Längsrichtung des Maschinengestells (5) und zur Längsrichtung des Auslegers (106) verlaufende Achse schwenkbar mit dem Innenabschnitt (109, 110) verbunden ist, **dadurch gekennzeichnet, dass** zum Antrieb eines Arbeitskreisels (3A) zwei Kreiselantriebswellen (125, 127) in Form von Gelenkwellen vorgesehen sind, von denen eine innere (125) zwischen einem am Maschinengestell (5) befindlichen Zentralgetriebe (114) und einem im Bereich des Auslegergelenks (124) angeordneten Wellenverbindungsglied (126) und eine äußere (127) zwischen dem Wellenverbindungsglied (126) und einem Kreiselgetriebe (116) angeordnet ist, und dass das Wellenverbindungsglied (126) dergestalt gelenkig mit dem Auslegergelenk (124) verbunden ist, dass bei einer Schwenkung des Außenabschnitts (123) des Auslegers (106) die sich daraus ergebenden Schwenkwinkel beider Kreiselgelenkwellen (125, 127) gegenüber dem Wellenverbindungsglied (126) annähernd gleich groß sind.

2. Heuwerbungsmaschine nach Anspruch 1, **dadurch gekennzeichnet, dass** die Schwenkwinkel der beiden Kreiselgelenkwellen (125, 127) annähernd halb so groß sind wie der Schwenkwinkel des Außenabschnitts (123) gegenüber dem Innenabschnitt (109, 110).

3. Heuwerbungsmaschine nach einem der Ansprüche 1 oder 2, **dadurch gekennzeichnet, dass** das Auslegergelenk (124) ein den Innenabschnitt (109,110) und den Außenabschnitt (123) des Auslegers (106) verbindendes Scharniergelenk auf Höhe der aneinander grenzenden Enden der beiden Abschnitte (109,110; 123) ist, daß auf der dem Auslegergelenk (124) gegenüberliegenden Seite an dem Innenabschnitt (109,110) ein starr mit dem Wellenverbindungsglied (126) verbundener Hebel (128) angelenkt ist, daß auf der Seite des Auslegergelenks (124) an dem Außenabschnitt (123) ein Lenker (130) angelenkt ist, der an seinem anderen Ende gelenkig mit dem freien Ende des Hebels (128) verbunden ist, und daß auf der Seite des Auslegergelenks (124) an dem Innenabschnitt (109,110) ein Linearaktor (131) angelenkt ist, der mit seinem anderen Ende an dem Hebel (128) angelenkt ist.

4. Heuwerbungsmaschine nach einem der Ansprüche 1 bis 3, **dadurch gekennzeichnet, dass** der Innenabschnitt des Auslegers (106) eine Teleskopstruktur mit einem Außenrohr (109) und einem längsverschiebbar in diesem gelagerten Innenrohr (110) oder Innenstab aufweist.

5. Heuwerbungsmaschine nach einem der Ansprüche 1 bis 4, **dadurch gekennzeichnet, dass** zumindest eine der Kreiselantriebswellen (125, 127) eine Teleskopstruktur mit einem Außenrohr und einem längsverschiebbar in diesem gelagerten Innenrohr oder Innenstab aufweist.

6. Heuwerbungsmaschine nach einem der Ansprüche 1 bis 5, **dadurch gekennzeichnet, dass** die Drehachse der inneren Kreiselantriebswelle (125) mit der Längsachse des Maschinengestells (5) und der Längsachse des den angetriebenen Kreisel (3A) tragenden Auslegers (106) ein Dreieck bildet.

7. Heuwerbungsmaschine nach einem der Ansprüche 1 bis 6, **dadurch gekennzeichnet, dass** die Drehachse der äußeren Kreiselantriebswelle (127) mit der Längsachse des Maschinengestells (5) und der Längsachse des den angetriebenen Kreisel (3A) tragenden Auslegers (106) ein Dreieck bildet.

8. Heuwerbungsmaschine nach einem der Ansprüche 1 bis 7, **dadurch gekennzeichnet, dass** die Drehachse mindestens einer der beiden Kreiselantriebswellen (125, 127) parallel zur Längsrichtung des Auslegers (106) liegt.

9. Heuwerbungsmaschine nach einem der Ansprüche 1 bis 8, **dadurch gekennzeichnet, dass** sie vier Arbeitskreisel (2A, 2B, 3A, 3B) aufweist, von denen die beiden vorderen (3A, 3B) in Arbeitsstellung einen größeren Arbeitsabstand voneinander haben als die beiden hinteren (2A, 2B), und dass ein vorderer Arbeitskreisel (3A) jeweils von einem Ausleger (106) getragen wird, der einen teleskopierbaren Innenabschnitt (109, 110) und einen schwenkbaren Außenabschnitt (123) umfasst.

10. Heuwerbungsmaschine nach Anspruch 9, **dadurch gekennzeichnet, dass** ein hinterer Arbeitskreisel (2A) jeweils von einem Ausleger (6) getragen wird, der eine Teleskopstruktur mit einem Außenrohr (9) und längsverschiebbar in diesem gelagerten Innenrohr (10) oder Innenstab aufweist.

11. Heuwerbungsmaschine nach Anspruch 10, **dadurch gekennzeichnet, dass** zum Antrieb eines hinteren Arbeitskreisels (2A) jeweils eine Kreiselantriebswelle (15) vorgesehen ist, die zwischen einem am Maschinengestell (5) angeordneten hinteren Zentralgetriebe (14) und einem an dem Arbeitskreisel (2A) angeordneten Kreiselgetriebe (16) so angeordnet ist, dass die Längsachse einer Kreiselantriebswelle (15) mit der Längsachse des Maschinengestells (5) und der Längsachse eines den angetriebenen Kreisel (2A) tragenden Auslegers (6) jeweils ein Dreieck bildet.

12. Heuwerbungsmaschine nach Anspruch 11, **dadurch gekennzeichnet, dass** die Kreiselantriebswelle (15) jeweils eine Teleskopstruktur mit einem Außenrohr und einem längsverschiebbar in diesem gelagerten Innenrohr (10) oder Innenstab aufweist.

13. Heuwerbungsmaschine nach einem der Ansprüche 11 oder 12, **dadurch gekennzeichnet, dass** die Kreiselantriebswelle (15) eine Gelenkwelle mit einem Kardangelenk an mindestens einem Ende ist.

14. Heuwerbungsmaschine nach einem der Ansprüche 11 bis 13, **dadurch gekennzeichnet, dass** das Ende des Auslegers (6) über die Drehachse (19) des von dem Ausleger (6) getragenen Arbeitskreisels (2A) hinausragt und der Arbeitskreisel (2A) über mindestens ein vom Ende des Innenrohres (10) oder Innenstabes des Auslegers (6) aus zurückragendes Verbindungsglied (21A, 21B) so an dem Innenrohr (10) oder der Innenstab befestigt ist, dass das Innenrohr (10) oder der Innenstab über die Drehachse (19) des Arbeitskreisels (2A) hinaus in das Außenrohr (9) einschiebbar ist.

15. Heuwerbungsmaschine nach einem der Ansprüche 11 bis 14, **dadurch gekennzeichnet, dass** die Drehachsen der Abtriebswellen des hinteren Zentralgetriebes (14) schräg zu seiner Antriebswelle verlaufen.

16. Heuwerbungsmaschine nach Anspruch 15, **dadurch gekennzeichnet, dass** die Drehachse der Antriebswelle eines Kreiselgetriebes (16) schräg zur Längsrichtung des den Arbeitskreisel (2A) tragenden Auslegers (6) verläuft und näherungsweise mit der Drehachse der ihr zugeordneten Abtriebswelle des hinteren Zentralgetriebes (14) fluchtet.

17. Heuwerbungsmaschine nach einem der Ansprüche 1 bis 16, **dadurch gekennzeichnet, dass** die Arbeitskreisel (2A; 3A) im hochgeklappten Zustand mittels der Teleskopstruktur der Ausleger (6; 106) so weit absenkbar sind, dass sie mit ihren Rändern nahezu den Boden berühren.

## Claims

1. Haymaking machine with a machine frame and with working rotors which are mounted on variable-length arms and can be folded up about pivot axes lying in the direction of travel for transport, an arm (106) comprising an inner portion (109, 110) and at least one outer portion (123) following said inner portion in the longitudinal direction and the outer portion (123) being connected to the inner portion (109, 110) by an arm joint (124) so as to be able to pivot about an axis running perpendicularly to the longitudinal direction of the machine frame (5) and to the longitudinal direction of the arm (106), **characterised in that** two rotor drive shafts (125, 127) are provided in the form of articulated shafts for driving a working rotor (3A), of which rotor drive shafts an inner shaft (125) is arranged between a central gearbox (114) located on the machine frame (5) and a shaft connecting member (126) arranged in the region of the arm joint (124) and an outer shaft (127) is arranged between the shaft connecting member (126) and a rotor gearbox (116), and **in that** the shaft connecting member (126) is articulated to the arm joint (124) in such a way that in the event of pivoting of the outer portion (123) of the arm (106), the pivot angles resulting therefrom of both rotor articulated shafts (125, 127) are of approximately the same size relative to the shaft connecting member (126).

2. Haymaking machine according to claim 1, **characterised in that** the pivot angles of the two rotor articulated shafts (125, 127) are approximately half the size of the pivot angle of the outer portion (123) relative to the inner portion (109, 110).

3. Haymaking machine according to one of claims 1 or 2, **characterised in that** the arm joint (124) is a hinge joint connecting the inner portion (109, 110) and the outer portion (123) of the arm (106) at the level of the adjoining ends of the two portions (109, 110; 123), **in that** a lever (128), which is rigidly connected to the shaft connecting member (126), is articulated to the inner portion (109, 110) on the side opposing the arm joint (124), **in that** a connecting rod (130) is articulated to the outer portion (123) on the side of the arm joint (124), which connecting rod is articulated at its other end to the free end of the lever (128), and **in that** a linear actuator (131) is articulated to the inner portion (109, 110) on the side of the arm joint (124), the other end of said linear actuator being articulated to the lever (128).

4. Haymaking machine according to one of claims 1 to 3, **characterised in that** the inner portion of the arm (106) has a telescopic structure with an outer tube (109) and an inner tube (110) or inner rod which is mounted in a longitudinally displaceable manner in said outer tube.

5. Haymaking machine according to one of claims 1 to 4, **characterised in that** at least one of the rotor drive shafts (125, 127) has a telescopic structure with an outer tube and an inner tube or inner rod which is mounted in a longitudinally displaceable manner in said outer tube.

6. Haymaking machine according to one of claims 1 to 5, **characterised in that** the axis of rotation of the inner rotor drive shaft (125) forms a triangle with the longitudinal axis of the machine frame (5) and the longitudinal axis of the arm (106) carrying the driven rotor (3A).

7. Haymaking machine according to one of claims 1 to 6, **characterised in that** the axis of rotation of the outer rotor drive shaft (127) forms a triangle with the longitudinal axis of the machine frame (5) and the longitudinal axis of the arm (106) carrying the driven rotor (3A).

8. Haymaking machine according to one of claims 1 to 7, **characterised in that** the axis of rotation of at least one of the two rotor drive shafts (125, 127) lies parallel to the longitudinal direction of the arm (106).

9. Haymaking machine according to one of claims 1 to 8, **characterised in that** it has four working rotors (2A, 2B, 3A, 3B), of which the front two rotors (3A, 3B) are in the working position at a greater working distance from each other than the rear two rotors (2A, 2B), and **in that** a front working rotor (3A) is respectively carried by an arm (106) comprising a telescopic inner portion (109, 110) and a pivotable outer portion (123).

10. Haymaking machine according to claim 9, **characterised in that** a rear working rotor (2A) is respectively carried by an arm (6) having a telescopic structure with an outer tube (9) and inner tube (10) or inner rod which is mounted in a longitudinally displaceable manner in said outer tube.

11. Haymaking machine according to claim 10, **characterised in that** a respective rotor drive shaft (15) is provided for driving a rear working rotor (2A), which rotor drive shaft is arranged between a rear central gearbox (14) arranged on the machine frame (5) and a rotor gearbox (16) arranged on the working rotor (2A) in such a way that the longitudinal axis of a rotor drive shaft (15) forms a respective triangle with the longitudinal axis of the machine frame (5) and the longitudinal axis of an arm (6) carrying the driven rotor (2A).

12. Haymaking machine according to claim 11, **characterised in that** the rotor drive shaft (15) has a respective telescopic structure with an outer tube and an inner tube (10) or inner rod which is mounted in a longitudinally displaceable manner in said outer tube.

13. Haymaking machine according to one of claims 11 or 12, **characterised in that** the rotor drive shaft (15) is an articulated shaft with a cardan shaft at at least one end.

14. Haymaking machine according to one of claims 11 to 13, **characterised in that** the end of the arm (6) protrudes beyond the axis of rotation (19) of the working rotor (2A) carried by the arm (6) and the working rotor (2A) is fastened to the inner tube (10) or the inner rod via at least one connecting member (21A, 21B) which is set back from the end of the inner tube (10) or inner rod of the arm (6) in such a way that the inner tube (10) or the inner rod can be inserted into the outer tube (9) beyond the axis of rotation (19) of the working rotor (2A).

15. Haymaking machine according to one of claims 11 to 14, **characterised in that** the axes of rotation of the output shafts of the rear central gearbox (14) run obliquely to its drive shaft.

16. Haymaking machine according to claim 15, **characterised in that** the axis of rotation of the drive shaft of a rotor gearbox (16) runs obliquely to the longitudinal direction of the arm (6) carrying the working rotor (2A) and is roughly aligned with the axis of rotation of the output shaft, associated with said drive shaft, of the rear central gearbox (14).

17. Haymaking machine according to one of claims 1 to 16, **characterised in that** the working rotors (2A; 3A) can be lowered, in the folded-up state, by means of the telescopic structure of the arms (6; 106) until their edges almost touch the ground.

## Revendications

1. Machine de fenaison avec un bâti de machine et avec des éléments rotatifs de travail logés sur des bras réglables en longueur qui peuvent être relevés pour le transport autour d'axes de pivotement se trouvant dans le sens de la marche, un bras (106) comportant une partie intérieure (109, 110) et au moins une partie extérieure (123) la suivant dans le sens longitudinal et la partie extérieure (123) étant reliée par une articulation de bras (124) à la partie intérieure (109, 110) de manière pivotante autour d'un axe s'étendant perpendiculairement au sens longitudinal du bâti de machine (5) et au sens longitudinal du bras (106), **caractérisée en ce que** pour l'entraînement d'un élément rotatif de travail (3a), deux arbres d'entraînement d'élément rotatif (125, 127) sont prévus sous la forme d'arbre articulé, dont un arbre intérieur (125) est disposé entre un engrenage central (114) se trouvant sur le bâti de machine (5) et un organe de liaison d'arbre (126) disposé dans la zone de l'articulation de bras (124) et un arbre extérieur (127) est disposé entre l'organe de liaison d'arbre (126) et un engrenage d'élément rotatif (116), et **en ce que** l'organe de liaison d'arbre (126) est relié de manière articulée à l'articulation de bras (124) de sorte que lors d'un pivotement de la partie extérieure (123) du bras (106), les angles de pivotement en résultant des deux arbres d'articulation d'élément rotatif (125, 127) soient approximativement de grandeur identique par rapport à l'organe de liaison d'arbre (126).

2. Machine de fenaison selon la revendication 1, **caractérisée en ce que** les angles de pivotement des deux arbres d'articulation d'élément rotatif (125, 127) sont approximativement deux fois moins grands que l'angle de pivotement de la partie extérieure (123) par rapport à la partie intérieure (109, 110).

3. Machine de fenaison selon l'une quelconque des revendications 1 ou 2, **caractérisée en ce que** l'articulation de bras (124) est une articulation à charnière reliant la partie intérieure (109, 110) et la partie extérieure (123) du bras (106) à hauteur des extrémités contiguës des deux parties (109, 110 ; 123), **en ce que** sur le côté opposé à l'articulation de bras (124), un levier (128) relié rigidement à l'organe de liaison d'arbre (126) est articulé sur la partie intérieure (109, 110), **en ce que** sur le côté de l'articulation de bras (124), une bielle (130) est articulée sur la partie extérieure (123), laquelle est reliée de manière articulée au niveau de son autre extrémité à l'extrémité libre du levier (128), et **en ce que** sur le côté de l'articulation de bras (124), un actionneur linéaire (131) qui est articulé avec son autre extrémité sur le levier (128), est articulé sur la partie intérieure (109, 110).

4. Machine de fenaison selon l'une quelconque des revendications 1 à 3, **caractérisée en ce que** la partie intérieure du bras (106) présente une structure télescopique avec un tube extérieur (109) et un tube intérieur (110) logé de manière mobile longitudinalement dans celui-ci ou une barre intérieure.

5. Machine de fenaison selon l'une quelconque des revendications 1 à 4, **caractérisée en ce qu'**au moins l'un des arbres d'entraînement d'élément rotatif (125, 127) présente une structure télescopique avec un tube extérieur et un tube intérieur logé de manière mobile longitudinalement dans celui-ci ou une barre intérieure.

6. Machine de fenaison selon l'une quelconque des revendications 1 à 5, **caractérisée en ce que** l'axe de rotation de l'arbre d'entraînement d'élément rotatif intérieur (125) forme un triangle avec l'axe longitudinal du bâti de machine (5) et l'axe longitudinal du bras (106) portant l'élément rotatif (3A) entraîné.

7. Machine de fenaison selon l'une quelconque des revendications 1 à 6, **caractérisée en ce que** l'axe de rotation de l'arbre d'entraînement d'élément rotatif extérieur (127) forme un triangle avec l'axe longitudinal du bâti de machine (5) et l'axe longitudinal du bras (106) portant l'élément rotatif (3A) entraîné.

8. Machine de fenaison selon l'une quelconque des revendications 1 à 7, **caractérisée en ce que** l'axe de rotation d'au moins un des deux arbres d'entraînement d'élément rotatif (125, 127) se trouve parallèle au sens longitudinal du bras (106).

9. Machine de fenaison selon l'une quelconque des revendications 1 à 8, **caractérisée en ce qu'**elle présente quatre éléments rotatifs de travail (2A, 2B, 3A, 3B), dont les deux éléments avant (3A, 3B) en position de travail présentent une distance de travail entre eux supérieure à celle des deux éléments arrière (2A, 2B), et **en ce qu'**un élément rotatif de travail (3A) avant est porté respectivement par un bras (106) qui comporte une partie intérieure (109, 110) télescopique et une partie extérieure (123) pivotante.

10. Machine de fenaison selon la revendication 9, **caractérisée en ce qu'**un élément rotatif de travail (2A) arrière est porté respectivement par un bras (6) qui présente une structure télescopique avec un tube extérieur (9) et un tube intérieur (10) logé de manière mobile longitudinalement dans celui-ci ou une barre intérieure.

11. Machine de fenaison selon la revendication 10, **caractérisée en ce qu'**un arbre d'entraînement d'élément rotatif (15) est respectivement prévu pour l'entraînement d'un élément rotatif de travail (2A) arrière, lequel est disposé entre un engrenage central (14) arrière disposé sur le bâti de machine (5) et un engrenage d'élément rotatif (16) disposé sur l'élément rotatif de travail (2A) de sorte que l'axe longitudinal d'un arbre d'entraînement d'élément rotatif (15) forme respectivement un triangle avec l'axe longitudinal du bâti de machine (5) et l'axe longitudinal d'un bras (6) portant l'élément rotatif (2A) entraîné.

12. Machine de fenaison selon la revendication 11, **caractérisée en ce que** l'arbre d'entraînement d'élément rotatif (15) présente respectivement une structure télescopique avec un tube extérieur et un tube intérieur (10) logé de manière mobile longitudinalement dans celui-ci ou une barre intérieure.

13. Machine de fenaison selon l'une quelconque des revendications 11 ou 12, **caractérisée en ce que** l'arbre d'entraînement d'élément rotatif (15) est un arbre articulé avec un joint de Cardan sur au moins une extrémité.

14. Machine de fenaison selon l'une quelconque des revendications 11 à 13, **caractérisée en ce que** l'extrémité du bras (6) dépasse de l'axe de rotation (19) de l'élément rotatif de travail (2A) porté par le bras (6) et l'élément rotatif de travail (2A) est fixé par au moins un organe de liaison (21A, 21B) redépassant de l'extrémité du tube intérieur (10) ou de la barre intérieure du bras (6) sur le tube intérieur (10) ou la barre intérieure de sorte que le tube intérieur (10) ou la barre intérieure puisse être insérée au-delà de l'axe de rotation (19) de l'élément rotatif de travail (2A) dans le tube extérieur (9).

15. Machine de fenaison selon l'une quelconque des revendications 11 à 14, **caractérisée en ce que** les axes de rotation des arbres d'entraînement de l'engrenage central (14) arrière s'étendent en biais par rapport à son arbre d'entraînement.

16. Machine de fenaison selon la revendication 15, **caractérisée en ce que** l'axe de rotation de l'arbre d'entraînement d'un engrenage d'élément rotatif (16) s'étend en biais par rapport au sens longitudinal du bras (6) portant l'élément rotatif de travail (2A) et s'aligne approximativement avec l'axe de rotation de l'arbre de sortie associé de l'engrenage central (14) arrière.

17. Machine de fenaison selon l'une quelconque des revendications 1 à 16, **caractérisée en ce que** les éléments rotatifs (2A ; 3A) peuvent être abaissés à l'état relevé au moyen de la structure télescopique des bras (6 ; 106) jusqu'à ce qu'ils touchent presque le sol avec leurs bords.
